Europäisches Patentamt

European Patent Office

Office européen des brevets

(19)

(11) EP 0 715 583 B1

(12) **FASCICULE DE BREVET EUROPEEN**

(45) Date de publication et mention
de la délivrance du brevet:
**26.03.1997 Bulletin 1997/13**

(21) Numéro de dépôt: **94925514.5**

(22) Date de dépôt: **16.08.1994**

(51) Int. Cl.$^6$: **B64D 1/14**

(86) Numéro de dépôt international:
**PCT/FR94/01010**

(87) Numéro de publication internationale:
**WO 95/06585 (09.03.1995 Gazette 1995/11)**

(54) **DISPOSITIF DE PROTECTION DESTINE A ETRE SOLIDARISE A UNE CHARGE SOUS PARACHUTE EN VUE DE PROTEGER CETTE DERNIERE LORS DE SON ATTERRISSAGE**

VORRICHTUNG ZUR DÄMPFUNG DES LANDUNGSAUFPRALLS EINER MIT EINEM FALLSCHIRM ABGEWORFENEN LAST

PROTECTIVE DEVICE FOR SECURING TO A PARACHUTE-CARRIED LOAD TO PROTECT THE LATTER ON LANDING

(84) Etats contractants désignés:
**ES FR IT**

(30) Priorité: **31.08.1993 FR 9310543**

(43) Date de publication de la demande:
**12.06.1996 Bulletin 1996/24**

(73) Titulaire: **CENTRE NATIONAL D'ETUDES
SPATIALES
F-75039 Paris Cedex 01 (FR)**

(72) Inventeur: **BOULLET, Bernard
F-31130 Fonsegrives (FR)**

(74) Mandataire: **Cabinet BARRE LAFORGUE &
associés
95, rue des Amidonniers
31000 Toulouse (FR)**

(56) Documents cités:
**DE-A- 3 917 662        FR-A-   843 985
US-A- 5 039 036**

EP 0 715 583 B1

**Description**

L'invention concerne un dispositif de protection destiné à être solidarisé à une charge sous parachute en vue de protéger cette dernière lors de son atterrissage.

De nombreuses missions scientifiques, visant notamment l'exploration des hautes couches atmosphériques ou l'astronomie, sont actuellement réalisées en utilisant des nacelles équipées d'un matériel scientifique spécifique dont l'ascension vers de très hautes altitudes est réalisée au moyen d'un ballon spatial, et dont la redescente vers le sol est assurée sous parachute.

Une des exigences qu'impose ce type de missions réside dans la nécessité de protéger, lors de l'atterrissage, les nacelles et le matériel souvent fragiles qu'elles transportent. A l'heure actuelle, cette protection est généralement réalisée en dotant les nacelles d'une ossature comportant quatre pieds constitués chacun d'un plot amortisseur, destinés à absorber partiellement le choc lors de l'atterrissage.

Cette solution s'avère fiable pour des nacelles peu fragiles, avec des conditions à l'atterrissage favorables (vent au sol et pente du terrain faibles). Par contre, lorsque l'un ou plusieurs de ces paramètres s'avère défavorable, il arrive fréquemment que les plots amortisseurs soient cisaillés et/ou que la nacelle se renverse, avec pour conséquence, dans chaque cas, une détérioration souvent importante de la nacelle et du matériel transporté.

La présente invention vise à pallier ces inconvénients et a pour objectif essentiel de fournir un dispositif assurant une protection efficace d'une charge sous parachute lors de son atterrissage.

A cet effet, l'invention vise un dispositif de protection comprenant :

- une embase support de la charge,
- une ceinture s'étendant sur le pourtour de l'embase et conformée de façon à former une coupole renversée dont ladite embase constitue le fond,
- des moyens de solidarisation de l'ensemble embase/ceinture avec la charge,
- un plot amortisseur central écrasable disposé sous l'embase,
- un bouclier de protection du plot amortisseur central disposé de façon à supporter ledit plot et relié à la ceinture au moyen de câbles de haute résistance à la traction uniformément répartis autour de l'axe dudit bouclier, et adaptés pour maintenir le plot amortisseur central pincé entre l'embase et le bouclier de protection.

(Il est à noter que par coupole renversée, on entend définir une ceinture présentant soit la forme d'une coupole, soit celle d'un tronc de cône aplati, soit toute forme intermédiaire entre ces deux extrêmes).

Ce dispositif de protection comprend donc, en premier lieu, une ceinture formant, à la base de la charge, une coupole renversée qui permet à l'ensemble, par élévation de son centre de gravité lors du basculement, de basculer sans renversement lors de l'atterrissage, avant que cet ensemble ne revienne à une position d'équilibre vertical sous l'effet de son poids.

Cette ceinture permet donc de diminuer de façon notable les risques de renversement de la charge lors d'un atterrissage sur terrain en pente ou lorsque les conditions de vent sont défavorables.

Le dispositif de protection comprend, en outre, un bouclier de protection du plot amortisseur central constituant avec les câbles associés un "soufflet" permettant le libre écrasement de ce plot, tout en limitant de façon optimale les déplacements horizontaux de ce dernier, assurant ainsi la protection dudit plot contre tout risque de cisaillement lors de l'impact avec le sol.

Ce bouclier de protection permet donc de garantir la fonction d'amortissement dévolue au plot central, protégeant ainsi la charge contre des décélérations trop importantes.

De plus, ce bouclier de protection joue également le rôle de patin de glissement sur sol terreux ou herbeux, minimisant ainsi les risques de renversement de la charge.

Par rapport aux dispositifs connus, un tel dispositif de protection permet donc de diminuer de façon notable les risques de détérioration des charges lors de leur atterrissage.

Selon une autre caractéristique préférée de l'invention, le dispositif de protection comprend des plots amortisseurs secondaires répartis sous la ceinture, dans des portions intermédiaires de la largeur de cette dernière.

De tels plots ont pour double fonction d'amortir le choc lors du basculement de la charge, et d'éviter un contact direct des bords de l'embase avec le sol.

Par ailleurs, le bouclier de protection présente, avantageusement, une forme tronconique à fond plat. Une telle forme a pour but de faciliter le glissement de ce bouclier sur le sol lors de l'atterrissage sur un terrain en pente ou un terrain meuble, ou lors d'une inclinaison de la charge due par exemple à un balancement de cette dernière sous le parachute.

Selon une autre caractéristique avantageuse de l'invention, la ceinture est composée de baleines rigides inclinées, réparties sur le pourtour de l'embase, et d'éléments de liaison reliant lesdites baleines entre elles.

En premier lieu, une telle structure de ceinture présente le double avantage d'être légère et d'offrir un très bon compromis poids/efficacité.

De plus, une telle ceinture constitue un système déformable qui est donc apte à absorber les chocs en cas d'atterrissage sur un terrain présentant une forte déclivité ou lors de la rencontre d'un obstacle.

Enfin, dans l'éventualité d'un renversement de la charge suivi d'un traînage de cette dernière par le parachute, les baleines peuvent faire office d'ancre.

Par ailleurs, selon une autre caractéristique préférée de l'invention, l'ensemble ceinture/embase présente, en coupe longitudinale, la forme d'un arc de cercle :

- dont le diamètre maximal D est tel que

$$D \geq 2 \sqrt{\left(\frac{vo^2}{2g} + ho\right)^2 - (ho - a)^2}$$

avec :

    . ho hauteur du centre de gravité de la charge équipée du dispositif de protection par rapport au sol dans la configuration écrasée du plot amortisseur central,

    . a hauteur de la coupole renversée par rapport au sol dans la configuration écrasée du plot amortisseur central,

    . vo vitesse du vent au sol,

- et dont le rayon de courbure R est tel que

$$R = \frac{D^2}{8a} + \frac{a}{2}.$$

D'autre caractéristiques, buts et avantages de l'invention ressortiront de la description détaillée qui suit, en référence aux dessins annexés qui en représentent à titre d'exemple non limitatif, un mode de réalisation préférentiel. Sur ces dessins qui font partie intégrante de la présente description :

- la figure 1 est une demi-vue de dessus d'un dispositif de protection conforme à l'invention,
- la figure 2 est une vue en élévation de ce dispositif équipant une charge dont seul le pourtour est représenté schématiquement,
- et la figure 3 représente de façon schématique, les différentes phases de l'atterrissage d'une charge équipée d'un dispositif de protection conforme à l'invention, avec une vitesse élevée de vent au sol.

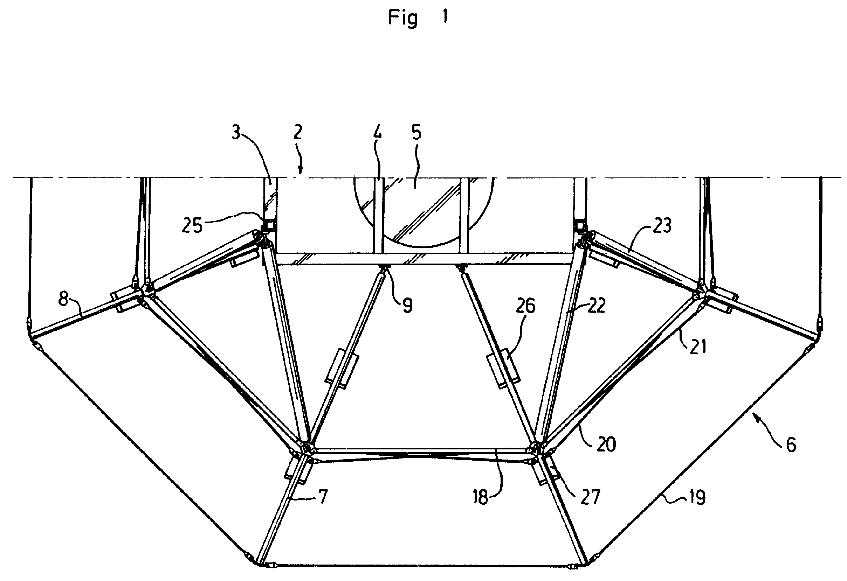

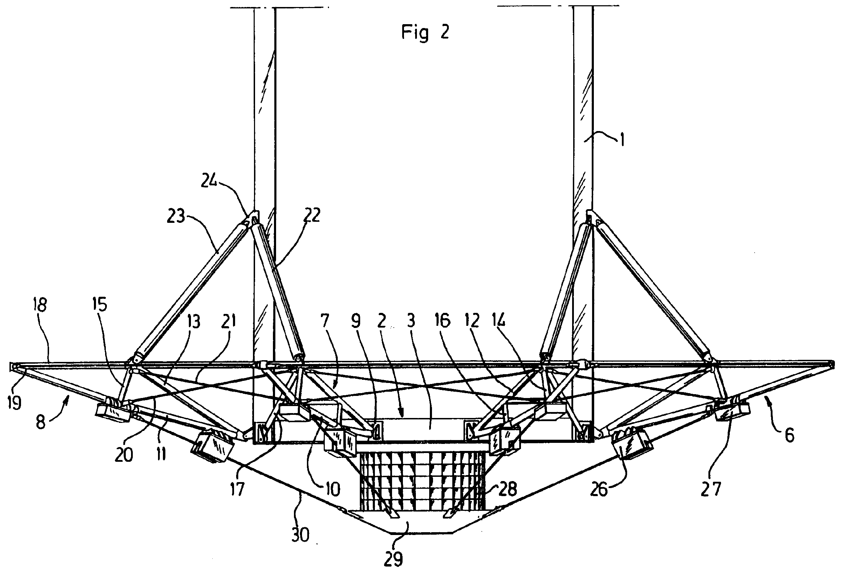

Le dispositif de protection représenté aux figures 1 et 2 est destiné à être solidarisé à une charge 1 sous parachute, représentée très schématiquement à la figure 2, en vue de protéger cette dernière lors de son atterrissage. Ce dispositif est utilisable avec tout type de charges, et notamment avec des nacelles scientifiques réutilisables.

Ce dispositif comprend, en premier lieu, une embase 2, support de la charge 1, comportant un cadre tubulaire rectangulaire 3 dont les grands côtés sont reliés, à distance de leurs extrémités, par deux traverses telles que 4.

Cette embase 2 comporte, également, une plaque circulaire 5 en matériau sandwich avec âme en nid d'abeilles, fixée sous les traverses 4 de façon que son axe de symétrie soit coaxial avec celui du cadre tubulaire 3.

Le dispositif de protection comporte, en outre, une ceinture 6 s'étendant sur le pourtour de l'embase 2 de façon à former une coupole renversée dont ladite embase constitue le fond.

Cette ceinture 6 se compose, en premier lieu, de huit baleines telles que 7, 8 inclinées vers le haut par rapport à l'embase 2. Ces baleines 7, 8 s'étendent radialement par rapport à l'axe de symétrie de l'embase 2 et sont uniformément réparties autour dudit axe.

Chacune des baleines 7, 8 est fixée sur la face externe d'un des profilés du cadre tubulaire 3 par l'intermédiaire d'une ferrure telle que 9.

De plus, la longueur de chaque baleine 7, 8 est adaptée pour que la distance entre l'extrémité de chacune desdites baleines et l'axe de symétrie de l'embase 2 soit identique et égale à une valeur prédéterminée $\frac{D}{2}$. En l'exemple, et en raison de la forme rectangulaire de l'embase 2, le respect de cette condition conduit à réaliser deux longueurs différentes de baleines, les quatre baleines 7 fixées sur les grands côtés de l'embase 2 présentant une longueur supérieure à celle des baleines 8 fixées sur les petits côtés de ladite embase.

Les baleines 7, 8 présentent, en outre, une structure tubulaire et se composent d'une membrure inférieure, respectivement 10, 11, et d'une membrure supérieure, respectivement 12, 13, leur conférant une forme longitudinale triangulaire, et d'une entretoise, respectivement 14, 15, reliant lesdites membrures au droit du sommet du triangle.

De plus, les baleines 7 de plus grande longueur comportent une deuxième entretoise 16. Par ailleurs, ces baleines 7 sont associées à des barres de triangulation 17 s'étendant entre le sommet de ces dernières et le cadre tubulaire 3 sensiblement au droit d'un des angles de ce dernier.

La ceinture 6 comprend, en second lieu, des éléments de liaison reliant les différentes baleines 7, 8 entre elles.

Ces éléments de liaison comportent, en premier lieu, des barres de liaison telles que 18 reliant les membrures supérieures 12, 13 des baleines 7, 8, au droit du sommet de ces dernières. Ils comprennent également des câbles tels que 19, à haute résistance à la traction, par exemple réalisés en "Kevlar", reliant les extrémités libres des baleines 7, 8.

Les éléments de liaison comprennent, enfin, des câbles tels que 20, 21 de haute résistance à la traction, tels que des câbles en "Kevlar", disposés en croix entre deux baleines 7, 8 contiguës au droit du sommet de ces dernières, de façon à relier chacun la membrure supérieure 12, 13 d'une baleine 7, 8 à la membrure inférieure 10, 11 d une autre baleine. Ces câbles "en croix" 20, 21 ont pour rôle d'éviter le déversement des baleines 7, 8 sous la pression du sol.

Le dispositif de protection comporte, par ailleurs, des barres de reprise telles que 22, 23 reliant la ceinture 6 à la charge. En l'exemple, ces barres de reprise 22, 23 sont agencées deux à deux de façon à former un V incliné par rapport à la verticale. Ces barres 22, 23 sont fixées, vers une de leurs extrémités, sur le sommet des membrures supérieures 12, 13 de deux baleines 7, 8 contiguës, et sont reliées vers leur autre extrémité par une ferrure 24 apte à être solidarisée à la charge.

En l'exemple, chaque paire de barres de reprise 22, 23 s'étend entre le sommet des membrures supérieures 12, 13 de deux baleines 7, 8 et un montant d'angle tel que 25 de la charge.

Le dispositif de protection comporte, par ailleurs, des plots amortisseurs dits secondaires, tels que 26, 27, et central 28.

Tous ces plots amortisseurs 26, 27, 28 sont réalisés en un matériau tel que du nid d'abeilles carton renforcé au moyen de ruban adhésif armé.

Les plots secondaires 26, 27 sont au nombre de deux par baleine 7, 8 et sont solidarisés sous des plaques en matériau sandwich à âme nid d'abeilles boulonnées sous la membrure inférieure 10, 11 de ces baleines, respectivement au niveau d'un tronçon proche de l'embase 2, et au droit du sommet desdites baleines.

La sous-face des plots secondaires 26 proches de l'embase 2 est, en outre, dotée d'une encoche longitudinale apte à loger un câble tel que décrit ci-dessous.

Le plot central 28 est quant à lui de forme octogonale. Il est disposé sous la plaque 5 de l'embase 2 et présente un même diamètre que celle-ci.

Le maintien de ce plot central 28 est assuré par un bouclier de protection 29 en tôle d'acier inoxydable de forme octogonale tronconique à fond plat, disposé sous ledit plot, et de câbles tels que 30 de haute résistance à la traction, tels que des câbles en "Kevlar", reliant ledit bouclier à la ceinture 6.

Ces câbles 30 sont au nombre de huit, et s'étendent radialement chacun entre la périphérie du bouclier de protection 29, et la membrure inférieure 10, 11 d'une baleine 7, 8, sensiblement au droit du sommet de cette baleine.

Ces câbles 30 sont, en outre, équipés d'un système de tension (non représenté) permettant de plaquer fermement le bouclier de protection 29 contre la face inférieure du plot central 28 lors du montage.

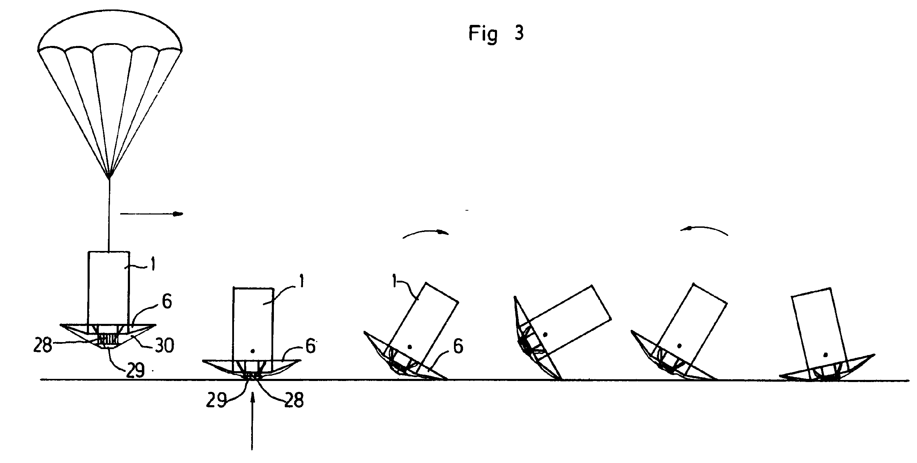

Tel qu'illustré à la figure 3, lors de l'atterrissage d'une charge équipée d'un dispositif de protection conforme à l'invention, avec un vent latéral, et une fois le plot central 29 écrasé, cette charge est amenée à basculer sans heurt grâce à la présence de la ceinture 6 avant de retrouver son équilibre.

La protection de la charge est donc doublement assurée, du fait de la présence, d'une part, de l'ensemble bouclier 29/câbles 30 qui évite le cisaillement éventuel du plot central 28, et d'autre part, de la ceinture 6 qui permet à la charge de basculer sans renversement.

**Revendications**

1. Dispositif de protection destiné à être solidarisé à une charge (1) sous parachute en vue de protéger cette dernière lors de son atterrissage, caractérisé en ce qu'il comprend :

- une embase (2) support de la charge (1),
- une ceinture (6) s'étendant sur le pourtour de l'embase (2) et conformée de façon à former une coupole renversée dont ladite embase constitue le fond,
- des moyens (22, 23) de solidarisation de l'ensemble embase (2)/ceinture (6) avec la charge (1),
- un plot amortisseur central écrasable (28) disposé sous l'embase (2),
- un bouclier (29) de protection du plot amortisseur central (28) disposé de façon à supporter ledit plot et relié à la ceinture (6) au moyen de câbles (30) de haute résistance à la traction uniformément répartis autour de l'axe dudit bouclier, et adaptés pour maintenir le plot amortisseur central (28) pincé entre l'embase (2) et le bouclier de protection (29).

2. Dispositif de protection selon la revendication 1, caractérisé en ce qu'il comprend des plots amortisseurs secondaires (26, 27) répartis sous la ceinture (6), dans des portions intermédiaires de la largeur de cette dernière.

3. Dispositif de protection selon l'une des revendications 1 ou 2, caractérisé en ce que chaque plot amortisseur (26-28) est réalisé en un matériau tel que du nid d'abeilles carton renforcé.

4. Dispositif de protection selon l'une des revendications précédentes, caractérisé en ce que le bouclier de protection (29) présente une forme tronconique à fond plat.

5. Dispositif de protection selon l'une des revendications précédentes, caractérisé en ce que la ceinture (6) est composée de baleines rigides inclinées (7, 8) réparties sur le pourtour de l'embase (2), et d'éléments de liaison (18-21) reliant lesdites baleines entre elles.

6. Dispositif de protection selon la revendication 5, caractérisé en ce que :

- chaque baleine (7, 8) présente une structure tubulaire et se compose d'une membrure inférieure (10, 11) et d'une membrure supérieure (12, 13) lui conférant une forme longitudinale triangulaire, et d'une entretoise (14, 15) reliant lesdites membrures au droit du sommet du triangle,
- les éléments de liaison (18-21) comportent des barres de liaison (18) reliant les membrures supérieures (12, 13) des baleines (7, 8) au droit du sommet de ces dernières, et des câbles (19) de haute résistance à la traction reliant lesdites baleines au niveau de leur extrémité opposée à l'embase (2).

7. Dispositif de protection selon la revendication 6, caractérisé en ce que les éléments de liaison (18-21) comprennent des câbles (20, 21) de haute résistance à la traction, disposés en croix entre deux baleines (7, 8) contiguës, au droit du sommet de ces dernières, de façon à relier chacun la membrure supérieure (12, 13) d'une baleine (7, 8) à la membrure inférieure (10, 11) d'une autre baleine (8, 7).

8. Dispositif de protection selon l'une des revendications 6 ou 7, caractérisé en ce que les câbles (30) disposés entre le bouclier de protection (29) et la ceinture (6), sont agencés de façon à relier chacun ledit bouclier à la membrure inférieure (10, 11) d'une baleine (7, 8), au droit du sommet de ladite baleine.

9. Dispositif de protection selon l'une des revendications 6 à 8, caractérisé en ce que les moyens de solidarisation à la charge (1) de l'ensemble embase (2)/ceinture (6) comprennent des barres de reprise (22, 23) agencées deux à deux de façon à former un V incliné par rapport à la verticale, lesdites barres étant fixées vers une de leurs extrémités, sur le sommet des membrures supérieures (10, 11) de deux baleines (7, 8) contiguës, et étant reliées vers leur haute extrémité, par une ferrure (24) apte à être solidarisée à la charge (1).

10. Dispositif de protection selon l'une des revendications précédentes, caractérisé en ce que l'ensemble ceinture (6)/embase (2) présente, en coupe longitudinale, la forme d'un arc de cercle :

- dont le diamètre maximal D est tel que

$$D \geq 2 \sqrt{\left(\frac{vo^2}{2g} + ho\right)^2 - (ho - a)^2}$$

avec :

. ho hauteur du centre de gravité de la charge (1) équipée du dispositif de protection par rapport au sol, dans la configuration écrasée du plot amortisseur central (28),

. a hauteur de la coupole renversée par rapport au sol dans la configuration écrasée du plot amortisseur central (28),

. vo vitesse du vent au sol,

- et dont le rayon de courbure R est tel que

$$R = \frac{D^2}{8a} + \frac{a}{2}.$$

**Claims**

1. Protective device for securing to a load (1) carried by parachute with a view to protecting the latter on landing, characterised in that it comprises:

- a base plate (2) supporting the load (1),
- a peripheral structure (6) extending about the periphery of the base plate (2) and so designed as to form an inverse cupola, said base plate constituting the base of said cupola,
- means (22, 23) for securing the assembly constituted by base plate (2)/peripheral structure (6) to the load (1),
- a crushable central damping unit (28) arranged below the base plate (2),
- a shield (29) for protecting the central damping unit (28), said shield being so arranged as to support said unit and linked to the peripheral structure (6) by means of high-tensile cables (30) uniformly distributed about the axis of said shield and so designed as to keep the central damping unit (28) clamped between the base plate (2) and the protective shield (29).

2. Protective device according to Claim 1, characterised in that it comprises secondary damping units (26, 27) distributed below the peripheral structure (6) in intermediate zones of the width of said peripheral structure.

3. Protective device according to one of Claims 1 or 2, characterised in that each damping unit (26-28) consists of a material such as a honeycomb made of reinforced cardboard.

4. Protective device according to one of the preceding claims, characterised in that the shape of the protective shield (29) is that of a truncated cone having a flat base.

5. Protective device according to one of the preceding claims, characterised in that the peripheral structure (6) is composed of inclined rigid frame-type ribs (7, 8) distributed about the periphery of the base plate (2) and of connecting elements (18- 21), linking said frame-type ribs to one another.

6. Protective device according to Claim 5, characterised in that:

- each frame-type rib (7, 8) has a tubular structure and is composed of a lower member (10, 11) and an upper member (12, 13) imparting to said frame-type rib a longitudinal triangular shape as well as of a strut (14, 15) connecting said members at right angles to the apex of the triangle,

- the connecting elements (18-21) comprise tie rods (18) linking the upper members (12, 13) of the frame-type ribs (7, 8) at right angles to the apexes of the latter as well as high-tensile cables (19) connecting said frame-type ribs in the region of their ends opposite the base plate (2).

7. Protective device according to Claim 6, characterised in that the connecting elements (18-21) comprise high-tensile cables (20, 21) intersecting one another between two adjacent frame-type ribs (7, 8) at right angles to the apexes of the latter, whereby each cable connects the upper member (12, 13) of a frame-type rib (7, 8) to the lower member (10, 11) of another frame-type rib (8, 7).

8. Protective device according to one of Claims 6 or 7, characterised in that the cables (30) arranged between the protective shield (29) and the peripheral structure (6) are so arranged that each of said cables connects said shield to the lower member (10, 11) of a frame-type rib (7, 8) at right angles to the apex of said frame-type rib.

9. Protective device according to one of Claims 6 to 8, characterised in that the means for securing the assembly constituted by base plate (2)/peripheral structure (6) to the load (1) comprise take-up bars (22, 23) arranged two by two so as to form an inclined V in relation to the vertical, said bars being secured at one of their ends to the apexes of the upper members (10, 11) of two adjacent frame-type ribs (7, 8) and connected at their top ends by means of a fitting (24) capable of being secured to the load (1).

10. Protective device according to one of the preceding claims, characterised in that in longitudinal section the shape of the assembly constituted by peripheral structure (6)/base plate (2) is that of a circular arc:

- the maximum diameter D of which corresponds to the formula

$$D \geq 2 \sqrt{\left(\frac{vo^2}{2g} + ho\right)^2 - (ho - a)^2}$$

where;

. ho is the height in relation to the ground of the centre of gravity of the load (1) equipped with the protective device in the crushed state of the central damping unit (28),

. a is the height in relation to the ground of the inverse cupola in the crushed state of the central damping unit (28),

. vo is the wind velocity at ground level,

- whereas its radius of curvature R corresponds to the formula $R = D^2/8a + a/2$ .

**Patentansprüche**

1. Schutzvorrichtung zur Anbringung an einer mit einem Fallschirm abgeworfenen Last (1) zwecks Dämpfung des Landungsaufpralls der besagten Last, dadurch gekennzeichnet, daß sie die folgenden Teile umfaßt:

- eine die Last (1) abstützende Grundplatte (2),
- eine sich um die Grundplatte (2) erstreckende, eine umgekehrte Kuppel bildende Umfangsstruktur (6), wobei die besagte Grundplatte den Boden der besagten Kuppel bildet,
- Mittel (22, 23) zur Anbringung der Baugruppe Grundplatte (2)/Umfangsstruktur (6) an der Last (1),
- eine unterhalb der Grundplatte (2) angeordnete zusammendrückbare mittlere Dämpfeinheit (28),
- ein Schild (29) zum Schutz der mittleren Dämpfeinheit (28), wobei das besagte Schild so angeordnet ist, daß es die besagte Dämpfeinheit abstützt, und mit Hilfe von hochzugfesten Kabeln (30) mit der Umfangsstruktur (6) verbunden ist, wobei die besagten Kabel (30) gleichmäßig rings um die Achse des besagten Schildes verteilt und so beschaffen sind, daß sie die mittlere Dämpfeinheit (28) in zwischen der Grundplatte (2) und dem Schutzschild (29) festgeklemmtem Zustand halten.

2. Schutzvorrichtung nach Anspruch 1, dadurch gekennzeichnet, daß sie sekundäre Dämpfeinheiten (26, 27) umfaßt, die unterhalb der Umfangsstruktur (6) in mittleren Bereichen von deren Weite verteilt sind.

3. Schutzvorrichtung nach einem der Ansprüche 1 oder 2, dadurch gekennzeichnet, daß jede Dämpfeinheit (26-28) aus einem Material wie einer Honigwabenstruktur aus verstärkter Pappe gefertigt ist.

4. Schutzvorrichtung nach einem der vorstehenden Ansprüche, dadurch gekennzeichnet, daß das Schutzschild (29) kegelstumpfförmig ist und einen flachen Boden umfaßt.

5. Schutzvorrichtung nach einem der vorstehenden Ansprüche, dadurch gekennzeichnet, daß sich die Umfangsstruktur (6) aus rings um den Umfang der Grundplatte (2) verteilten, schräg angeordneten, starren rahmenförmigen Rippen (7, 8) sowie aus die besagten rahmenförmigen Rippen untereinander verbindenden Verbindungselementen (18-21) zusammensetzt.

6.  Schutzvorrichtung nach Anspruch 5, dadurch gekennzeichnet:

    - daß jede rahmenförmige Rippe (7, 8) eine rohrförmige Struktur aufweist und sich aus einem unteren Glied (10, 11) und einem oberen Glied (12, 13), die der besagten rahmenförmigen Rippe eine dreieckige Längsform verleihen, sowie aus einer die besagten Glieder rechtwinkelig zu dem Scheitel des Dreiecks verbindenden Strebe (14, 15) zusammensetzt,
    - daß die Verbindungselemente (18-21) die oberen Glieder (12, 13) der rahmenförmigen Rippen (7, 8) rechtwinkelig zu den Scheiteln der besagten rahmenförmigen Rippen verbindende Verbindungsstäbe (18) sowie die besagten rahmenförmigen Rippen im Bereiche von deren der Grundplatte (2) gegenüber befindlichen Enden verbindende hochzugfeste Kabel (19) umfassen.

7.  Schutzvorrichtung nach Anspruch 6, dadurch gekennzeichnet, daß die Verbindungselemente (18-21) hochzugfeste Kabel (20, 21) umfassen, die so angeordnet sind, daß sie einander zwischen zwei aneinander angrenzenden rahmenförmigen Rippen (7, 8) kreuzen und rechtwinkelig zu den Scheitelpunkten der besagten rahmenförmigen Rippen verlaufen, so daß jedes obere Glied (12, 13) einer rahmenförmigen Rippe (7, 8) mit einem unteren Glied (10, 11) einer anderen rahmenförmigen Rippe (8, 7) verbunden ist.

8.  Schutzvorrichtung nach einem der Ansprüche 6 oder 7, dadurch gekennzeichnet, daß die zwischen dem Schutzschild (29) und der Umfangsstruktur (6) befindlichen Kabel (30) so angeordnet sind, daß jedes der besagten Kabel das besagte Schild mit dem unteren Glied (10, 11) einer rahmenförmigen Rippe (7, 8) rechtwinkelig zu dem Scheitel der besagten rahmenförmigen Rippe verbindet.

9.  Schutzvorrichtung nach einem der Ansprüche 6 bis 8, dadurch gekennzeichnet, daß die Mittel zur Anbringung der Baugruppe Grundplatte (2)/Umfangsstruktur (6) an der Last (1) Aufnahmestäbe (22, 23) umfassen, die paarweise angeordnet sind, so daß sie ein im Verhältnis zu der Senkrechten geneigtes V bilden, wobei die einen Enden der besagten Stäbe an den Scheitelpunkten der oberen Glieder (10, 11) von zwei aneinander angrenzenden rahmenförmigen Rippen (7, 8) und deren obere Enden mit Hilfe eines an der Last (1) anbringbaren Beschlags (24) befestigt sind.

10. Schutzvorrichtung nach einem der vorstehenden Ansprüche, dadurch gekennzeichnet, daß die Baugruppe Umfangsstruktur (6)/Grundplatte (2) im Längsschnitt kreisbogenförmig ist:

    - wobei deren Höchstdurchmesser D der Formel

$$D \geq 2 \sqrt{\left(\frac{vo^2}{2g} + ho\right)^2 - (ho - a)^2}$$

    entspricht, in der:

    .   ho = Höhe des Schwerpunkts der mit der Schutzvorrichtung ausgestatteten Last (1) in Verhältnis zum Boden, und zwar im zusammengedrückten Zustand der mittleren Dämpfeinheit (28),
    .   a = Höhe der umgekehrten Kuppel in Verhältnis zum Boden, und zwar im zusammengedrückten Zustand der mittleren Dämpfeinheit (28),
    .   vo = Windgeschwindigkeit in Bodenhöhe,

    - und wobei deren Krümmungshalbmesser R der Formel R = D$^2$/8a + a/2 entspricht.

Fig 1

Fig 2

Fig 3